Europäisches Patentamt

European Patent Office

Office européen des brevets

(19)

(11) Numéro de publication: **0 120 775 B1**

(12) **FASCICULE DE BREVET EUROPEEN**

(45) Date de publication du fascicule du brevet: **11.05.88**

(51) Int. Cl.⁴: **G 01 S 17/58**, G 01 S 17/10

(21) Numéro de dépôt: **84400561.1**

(22) Date de dépôt: **20.03.84**

(54) Système de télémétrie laser et de mesure Doppler, à compression d'impulsions.

(30) Priorité: **29.03.83 FR 8305142**

(43) Date de publication de la demande:
**03.10.84 Bulletin 84/40**

(45) Mention de la délivrance du brevet:
**11.05.88 Bulletin 88/19**

(84) Etats contractants désignés:
**DE GB**

(56) Documents cités:
**EP-A-0 023 857**
**FR-A-2 161 841**
**FR-A-2 212 714**

**IEEE JOURNAL OF QUANTUM ELECTRONICS;
vol. QE-9, no. 6, juin 1973, pages 656-657, New
York, US; H.W. MOCKER et al.: "An airborne
laser doppler velocimenter"**

**CONFERENCE PROCEEDINGS - MILITARY
MICROWAVES '82, 20-22 octobre 1982,
Londres, pages 59-65, Microwave exhibitions
and Publishers Ltd., Tunbridge Wells, Kent,
GB; K.F. HULME et al.: "A CW CO2 laser range
finder/velocimeter using heterodyne
detection"**

(73) Titulaire: **THOMSON-CSF
173, Boulevard Haussmann
F-75379 Paris Cédex 08 (FR)**

(72) Inventeur: **Arnaud, Georges
Thomson-CSF SCPI 173, bld. Haussmann
F-75379 Paris Cedex 08 (FR)**
Inventeur: **Meyzonnette, Jean-Louis
Thomson-CSF SCPI 173, bld. Haussmann
F-75379 Paris Cedex 08 (FR)**
Inventeur: **Remy, Bertrand
Thomson-CSF SCPI 173, bld. Haussmann
F-75379 Paris Cedex 08 (FR)**
Inventeur: **Robin, Léon Pierre
Thomson-CSF SCPI 173, bld. Haussmann
F-75379 Paris Cedex 08 (FR)**

(74) Mandataire: **Trocellier, Roger et al
THOMSON-CSF SCPI 19, avenue de Messine
F-75008 Paris (FR)**

Courier Press, Leamington Spa, England.

EP 0 120 775 B1

## Description

La présente invention concerne des perfectionnements aux systèmes de télémétrie laser et de mesure Doppler à compression d'impulsions, et dont l'utilisation est envisagée, en particulier, pour équiper des systèmes de conduite de tir.

L'invention concerne, de manière plus précise, un tel système doté de moyens d'acquisition et de poursuite du glissement de fréquence Doppler dû à la composante radiale de la vitesse de la cible mobile poursuivie.

Dans le cas d'un radar le glissement de fréquence, dit fréquence Doppler, n'apporte guère de pertubations compte-tenu des valeurs de longueur d'onde du radar et de la bande passante moyenne fréquence des circuits de réception.

Par contre, dans le cas de télémètres lasers ou de systèmes lidars, la longueur d'onde est très faible et la fréquence Doppler qui est donnée par l'expression $F_D=2V_R/\lambda$ devient très grande pour de faibles variations de la vitesse radiale $V_R$. A titre d'exemple, pour un lidar de longueur d'onde $\lambda=10,59\ \mu m$, le glissement de fréquence Doppler varie de 0,19 MHz chaque fois que la vitesse varie d'un mètre par seconde. En conséquence, on a trés vite atteint les limites de la bande passante moyenne fréquence du récepteur. Par exemple, pour une bande passante de $\pm12,5$ MHz de part et d'autre d'une fréquence centrale intermédiaire de 150 MHz, on aura atteint ces bornes pour une vitesse radiale de l'orde de $\pm240$ Km/h. Il en résulte des limites importantes pour l'exploitation au delà desquelles il y a perte d'information du signal qui n'est plus traité par le récepteur. En conséquence, le système présente des difficultés de conception. Une solution serait d'accroître la bande passante en aval du photo-mélangeur avec tous les inconvénients inhérents à cette solution.

Il est connu par la pbulication FR—A—2 462 717 de la demande de brevet en France 79 19 970 du 3 août 1979, un système de télémétrie laser et de mesure Doppler à compression d'impulsions comportant: des moyens d'émission et d'oscillation locale dotés d'un générateur laser pour produire une première onde laser modulée en fréquence de part et d'autre d'une valeur moyenne $F_E$, cette première onde laser étant destinée à l'émission et pour produire une deuxième onde laser non modulée de fréquence $F_L$ destinée à une réception superhétérodyne, un photo-mélangeur pour mélanger l'onde de fréquence $F_L$ avec les signaux lumineux reçus et produire un signal électrique de battement ayant la fréquence $F_I+F_D$ lors d'une détection d'une cible mobile, où $F_I=F_E-F_L$ et $F_D$ est la dérive en fréquence due à l'effet Doppler; un récepteur alimenté par ledit signal électrique et qui comporte des circuits de traitement par compression et détection ainsi que des circuits de calcul de la distance et de la fréquence Doppler des cibles détectées. Ce système permet de mesurer, à la fois, la distance et la vitesse radiale et est aménagé plus particulièrement pour discriminer sans ambiguïté plusieurs cibles détectées. Il comporte à l'émission, deux paires de lignes à retard variable en fonction de la fréquence, de pentes $+K$ et $-K$, $+K'$ et $-K'$ respectivement, et un même jeu de lignes à la réception utilisées de manière conjuguée, pour produire périodiquement deux impulsions d'émission en utilisant une paire de lignes différentes d'une période à la suivante et pour déduire des instants de réception d'échos, par un calcul simple avec levée d'ambiguïté, une mesure fiable de la distance et de la vitesse radiale de chaque cible détecté.

Cette solution ne peut fonctionner que pour des cibles dont la vitesse n'est par trop élevée. A cause des lignes dispersives, le traitement utilisé n'est en effet adapté que dans une plage limitée à $\pm2$ MHz einviron ce qui correspond à des vitesses radiales n'excédant pas $\pm10$ m/s, soit $\pm36$ km/h environ. Ce système est donc plus particulièrement applicable à des versions surface-surface et non à des sytèmes surface-air ou air-air où les cibels rapides peuvent évoluer à plusieurs Machs.

Le but de l'invention est de remédier aux inconvénients précités en équipant le système de télémétrie laser et de mesure Doppler de moyens d'acquisition et de poursuite de cibles mobiles permettant d'effectuer rapidement l'acquisition, puis la compensation automatique du glissement Doppler dû à la cible mobile, cette compensation étant produite électriquement en aval du photo-mélangeur de réception.

Il est connu notamment par la demande de brevet FR—A—2 212 714, d'utiliser un asservissement de fréquence d'une onde d'oscillateur local destinée à un mélangeur d'entrée pour produire un signal de sortie de fréquence incluse dans la bande moyenne fréquence du récepteur. Cette technique s'adresse aux récepteurs suiveurs de fréquence en général. Le processus comporte une phase préliminaire dite de recherche, ou d'acquisition, au cours de laquelle est effectué un balayage en fréquence de l'onde locale pour explorer une plage d'exploitation. Le balayage cesse dès que l'on obtient le battement dans le mélangeur avec un niveau de sortie suffisant. Vient ensuite la phase dite de poursuite, au cours de laquelle les faibles variations de fréquence du signal reçu sont compensées automatiquement et instantanément par une boucle suiveuse. Ces variations comportent notamment celles de l'effet Doppler dans le cas de cibles mobiles détectées.

Suivant l'invention, il est proposé de réaliser un sytème de télémétrie laser et de mesure Doppler, à compression d'impulsions, du type rappelé précédemment avec la référence FR—A—2 462 717, ledit système comportant, en outre, des moyens d'acquisition et de poursuite de cible mobile destinés à produire une transposition de la fréquence $F_I+F_D$ à $F_I$ du signal électrique de battement, lesdits moyens d'acquisition et de poursuite comportant:

—dans le récepteur, un mélangeur BLU connecté par une première entrée à la sortie du photo-mélangeur et par une deuxième entrée à un oscillateur local à commande électrique délivrant la fréquence d'oscillation locale pour ladite transposition de fréquence, une boucle d'acquisition Doppler connectée entre le photo-mélangeur et l'oscillateur local commandé, laquelle boucle comporte un analyseur de spectre rapide pour identifier, à partir du signal de battement, la valeur $F_{Do}$ représentant sensiblement la dérive Doppler produite par la cible pendant une première phase, dite phase d'acquisition, et pour produire en fonction de $F_{Do}$ un signal de calage gros fourni à l'oscillateur local commandé et maintenu aussi dans une seconde phase, dite phase de poursuite, pour compenser la dérive Doppler $F_{Do}$ dans le signal électrique transposé, et une boucle de poursuite connectée également à l'oscillateur local commandé et recevant le signal de sortie des circuits de calcul, la boucle de poursuite effectuant la compensation fine de l'écart différentiel $F_D$ se produisant pendant la phase de poursuite entre la valeur instantanée $F_D$ de la dérive Doppler et la valeur $F_{Do}$,

—et dans l'émetteur, des moyens de commande pour effectuer l'émission de l'onde laser $F_E$ modulée à fréquence constante durant la phase d'acquisition.

Les particularités et avantages de la présente invention apparaîtront dans la description qui suit donnée à titre d'exemple non limitatif, à l'aide des figures annexées qui représentent:

—Fig. 1, un bloc diagramme général d'un système laser à compression d'impulsions conforme à l'invention;

—Fig. 2, des formes d'ondes relatives au fonctionnement;

—Fig. 3, un diagramme d'un mode de réalisation d'un système laser à compression d'impulsions selon l'invention;

—Fig. 4, un schéma d'une ligne à retard électro-acoustique utilisée dans le système laser; et

—Fig. 5, un diagramme d'un analyseur de spectre rapide utilisé dans le système laser.

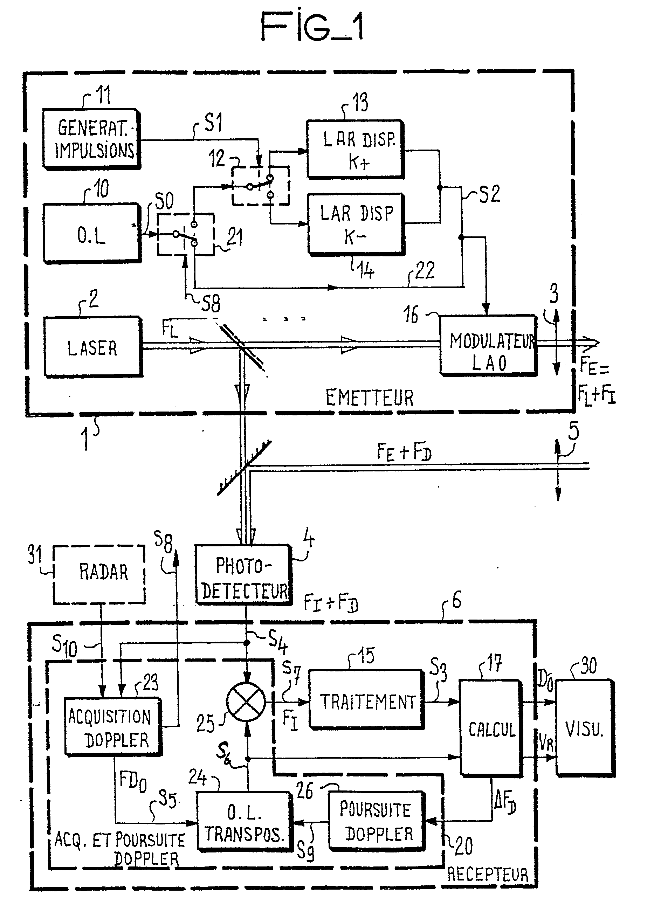

Sur le diagramme général de la Fig. 1, on a représenté par le bloc 1 des moyens d'émission de deux ondes lumineuses à partir d'au moins un générateur laser 2, une première onde laser de fréquence $F_L$ modulée en fréquence de part et d'autre d'une valeur moyenne $F_E$. Cette première onde lumineuse est de préférence modulée selon une loi linéaire en dents de scie croissante puis décroissante renouvelée périodiquement; elle est transmise à un dispositif de rayonnement 3 qui est constitué par un système optique approprié, par exemple, une optique catadioptrique de type Cassegrain. Les moyens d'émission 1 élaborent en outre une deuxième onde laser non modulée et dont la fréquence est donnée par l'expression $F_L=F_E-F_I$. Cette deuxième onde peut être constituée par une fraction de l'onde laser $F_L$ et constitue une onde locale destinée au mélangeur 4 pour effectuer une réception superhétérodyne et produire, par battement avec une onde de réception, la fréquence centrale intermédiaire $F_I$. Le dispositif photo-mélangeur 4 reçoit les signaux lumineux de réception à travers un système optique de réception 5 coaxial avec l'optique d'émission 3. Le signal électrique de battement S4 à la fréquence

$F_I+F_D$, où $F_D$ est la dérive Doppler de la cible illuminée, est transmis au récepteur 6. Les moyens d'émission 1 et de réception 6 sont agencés pour produire le fonctionnement à compression d'impulsions.

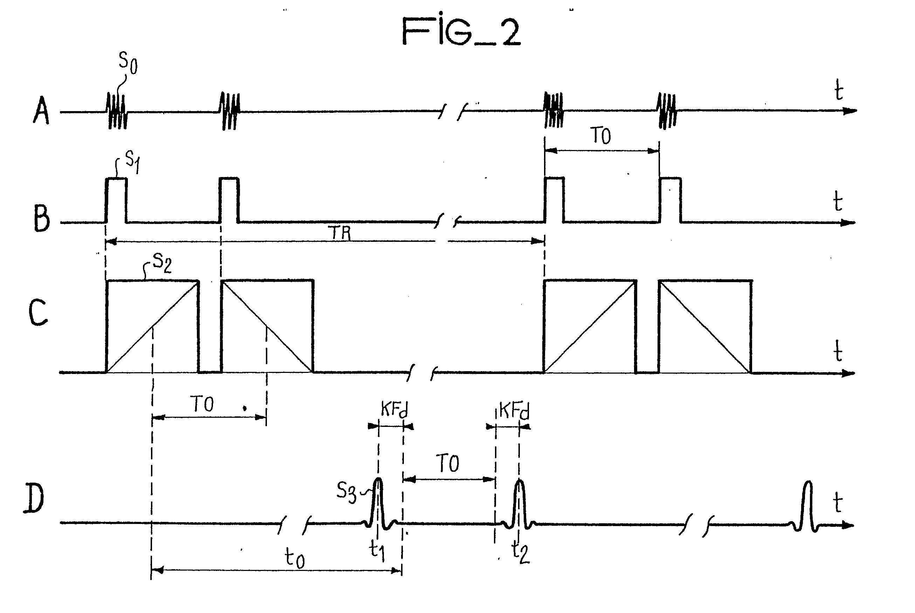

Selon des techniques connues, les moyens d'émission et de réception dans un système lidar à compression d'impulsions utilisent les propriétés des lignes à retard dispersives; il est également connu que lorsque la cible présente une vitesse radiale à laquelle correspond un glissement Doppler $F_D$, on montre que l'impulsion comprimée est déplacée dans le temps d'une valeur égale à $-KF_D$ en valeur algébrique, K étant la constante caractéristique de la ligne à retard dispersive (K supérieur à zéro pour une modulation dans laquelle la fréquence croît avec le temps, K inférieur à zéro dans le cas contraire). L'incertitude Doppler-distance est levée en émettant successivement deux impulsions, l'une modulée en fréquence croissante et l'autre modulée en fréquence décroissante. Si l'on appelle $t_1$ et $t_2$ les instants d'occurence des échos relatifs aux lignes de pentes $-K$ et $+K$ respectivement (Fig. 2D). Si to est le temps séparant les instants d'émission et de réception d'une même impulsion et To l'intervalle de temps séparant à l'émission deux impulsions d'une même paire, on en déduit les relations (origine des temps prise à l'instant de la première impulsion):

$$t_1 = to - KF_D$$

$$t_2 = to + To + KF_D$$

les valeurs de to et FD:

$$to = \frac{t_1 + t_2 - To}{2}$$

$$F_D = \frac{t_2 - t_1 - To}{2K}$$

d'où l'on tire les valeurs de la distance Do et de la vitesse radiale $V_R$ par:

$$Do = \frac{c}{2} \, to$$

et

$$V_R = \frac{\lambda}{2} F_D$$

En résumé, de la connaissance des valeurs de $t_1$ et $t_2$ on déduit Do et $V_R$.

Les valeurs de $t_1$ et $t_2$ étant connues avec une précision dépendant du rapport signal à bruit, il est nécessaire en longue portée d'effectuer une post-intégration avec un durée maximale compatible des performances du dispositif de pointage ou de poursuite angulaire.

Les moyens d'émission comportent un oscillateur local 10 et un générateur d'impulsions 11 pour commuter alternativement la sortie de l'oscillateur, à travers un circuit de commutation 12, à une première ligne dispersive 13 puis à une deuxième ligne 14, de pentes respectives +K et −K. Les signaux referencés S0, S1 et S2 sont symbolisés sur la Fig. 2. Le signal S0 local est considéré en sortie du commutateur 12 commandé par les deux impulsions S1 à chaque période TR d'émission. Le signal S2 est obtenu apprès passage dans les lignes dispersives 13 et 14, la pente indiquée représente une variation linéaire de fréquence (fonction Chirp), respectivement croissante et décroissante. Le signal vidéo S3 est celui recueilli en sortie des circuits de traitement 15 où s'effectue la compression et la détection vidéo.

Le signal S2 est appliqué à un modulateur acousto-optique 16 pour moduler en fréquence le faisceau laser. Pour le fonctionnement du modulateur acousto-optique on pourra se reporter à de nombreuses documentations techniques; entre autre, on signale sur le sujet l'article de Robert Adler paru dans la revue IEEE spectrum de Mai 1967, pages 42 à 47, intitulé "Interraction Beteeen Light and Sound".

Le mélangeur 4 est constitué par un photodétecteur qui reçoit par une entrée un signal lumineux à la fréquence $F_L$ dérivé de l'onde émise par le laser par un séparateur optique, par une autre entrée le signal lumineux de réception à la fréquence $F_E + F_D$, et qui délivre en sortie le signal électrique de battement S4.

Conformément à une caractéristique de l'invention, le système est agencé avec des moyens d'acquisition et de poursuite du glissement de la fréquence Doppler $F_D$ lié à la vitesse radiale d'une cible mobile. Ces moyens d'acquisition et de poursuite sont constitués essentiellement par des moyens de transposition de la fréquence $F_i + F_D$ de l'onde de battement S4 issue du photomélangeur 4 à la valeur intermédiaire $F_I$ pour compenser la dérive Doppler $F_D$ présentée. Ces moyens de transposition comportent le bloc 20 dans le récepteur et le circuit de commutation 21 et la liaison 22 coté émetteur. En phase de recherche et d'acquisition Doppler, le commutateur 21 transmet directement l'onde locale S0 par la connexion 22 au modulateur acousto-optique 16 pour produire un mode continu d'émission dit CW de l'onde laser $F_L$ qui est modulé sans interruption à la fréquence constante de l'oscillateur 10. Le bloc 20 se compose d'une boucle d'acquisition Doppler 23 dotée d'un analyseur de spectre couvrant la bande Doppler exploitée pour détecter rapidement la fréquence Doppler du signal de battement S4 avec une précision limitée et produire un rattrapage gros. Cette boucle alimente par sa sortie S5 un oscillateur local 24 controlé par tension ou VCO (Voltage Control Oscillator) dont la sortie S6 est appliquée à un mélangeur 25 qui reçoit par ailleurs le signal S4. A la tension S5 correspond une fréquence $F_{Do}$ du signal local S6 suffisamment proche de la valeur de dérive Doppler incidente (cas général, une correspondance exacte relève d'une probabilité faible), en sorte que la sortie S7 du mélangeur 25 se trouve comprise dans la bande de réception.

Dès cet instant la phase d'acquisition est terminée, l'action de la boucle est automatiquement bloquée, sa sortie S5 reste en l'état et elle fournit un signal de commande S8 qui actionne le circuit commutateur 21 de l'émetteur. Le fonctionnement du système passe alors en mode poursuite pour effectuer avec une émission modulée en fréquence et une réception adaptée, la rattrapage fin de la dérive Doppler $\Delta F_D$ correspondant à l'écart différentiel entre la fréquence Doppler instantanée $F_D$ et la valeur $F_{Do}$ de calage d'acquisition. Les moyens correspondants consistent en une deuxième boucle faisant intervenir un circuit de calcul 17 qui calcule à partir du signal vidéo détecté S3 la valeur différentielle Doppler $\Delta F_D$ et un asservissement 26 assurant la poursuite Doppler en délivrant à l'oscillateur local de transposition 24 une tension de commande S9 correspondant à cet écart différentiel instantané $\Delta F_D$. Le circuit de calcul 17 sert normalement à produire les données distance $D_o$ et vitesse radiale $V_R$ (ou fréquence Doppler $F_D$) de la cible détectée selon les relations citées précédemment, en vue de leur exploitation annexe, par exemple dans un dispositif de visualisation 30. Le récepteur étant asservi en fréquence Doppler, $F_D$ ne traduit dans les formules précédentes que l'écart $\Delta F_D$ entre fréquence centrale intermédiaire $F_I$ du récepteur et la fréquence centrale du signal reçu, ces valeurs étant prises en aval du mélangeur 25 de compensation Doppler. Pour le calcul de la vraie valeur de la fréquence Doppler, il faut tenir compte de la fréquence du VCO 24. La sortie S6 de cet oscillateur donne par rapport à une fréquence de référence du VCO (Doppler nul) cette vraie valeur.

Le télémètre laser peut être combiné avec un dispositif annexe 31, par exemple un système radar, susceptible de donner préalablement une mesure de la fréquence Doppler $F_D$ avec une moindre précision. Le signal S10 correspondant à cette mesure peut être alors utilisé pour effectuer le calage gros désiré et utilisant un analyseur de spectre dont la bande passante est notablement plus réduite, moyennant une transposition de la fréquence du signal S4 issu du mélangeur local 4 comme il apparaîtra dans ce qui suit.

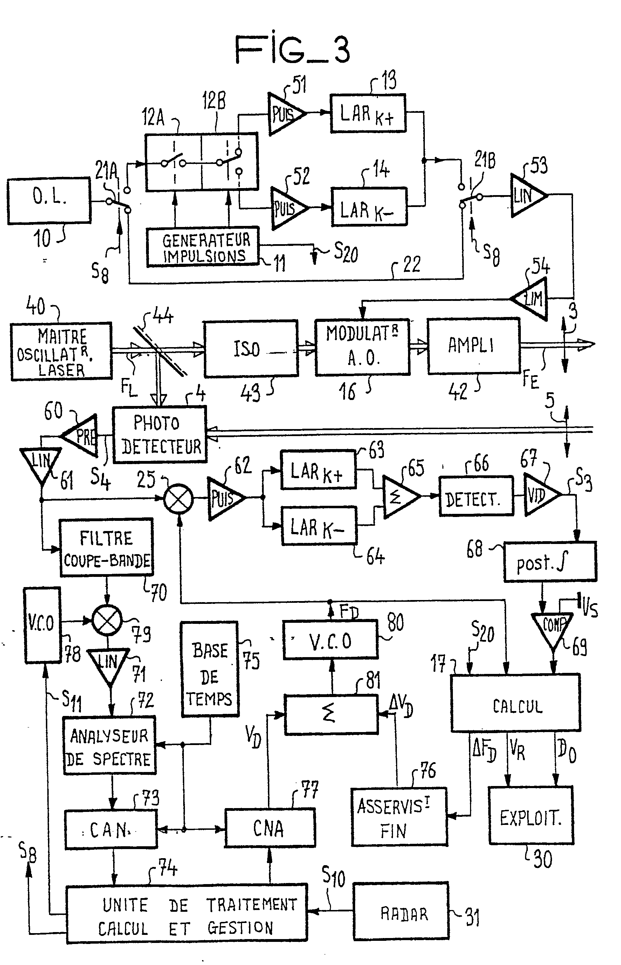

La Figure 3 se rapporte à un exemple de réalisation du système de télémètrie laser et de mesure Doppler à compression d'impulsions, équipé des moyens d'acquisition et de poursuite.

Le fonctionnement des lignes à retard dispersives équivaut à une autocorrélation et la présence d'une composante Doppler faible aboutit à un glissement dans le tamps du pic d'autocorrélation qui peut-être utilisé pour la mesure. Pour des valeurs du glissement Doppler $F_D$ élevées on montre aisément que la qualité de la fonction d'autocorrélation qui constitue l'impulsion comprimée, se dégrade rapidement par écrasement du lobe principal et remontée des lobes secondaires. Il est par ailleurs évident qu'un glissement d'un oscillateur de puissance qui produit l'onde $F_E$ par rapport à un oscillateur local qui serait utilisé pour produire l'onde $F_L$ aurait le même effet, avec en plus introduction d'une erreur systématique dans la mesure de $F_D$. Tous ces problèmes sont résolus dans un système laser équipé conformément à l'invention selon la solution représentée sur la Figure 3.

Suivant cette réalisation, le système ne comporte qu'un seul générateur laser qui constitue un maître oscillateur de puissance 40. Le modulateur 16 du type acousto-optique est extérieur à la cavité du laser dans cette configuration; il est éventuellement suivi d'un amplificateur de puissance 42 et est précédé d'un isolateur à effet Faraday 43 qui permet de réduire les rétrocouplages parasites dûs aux réflexions et diffusions résiduelles dans le modulateur. La glace partiellement transparente 44 permet de renvoyer une partie de l'énergie du faisceau d'émission non modulé de fréquence $F_L$ pour constituer l'onde locale dirigée vers le mélangeur 4. Les circuits de modulation comprennent principalement, connectés comme représenté: un oscillateur 10 à quartz à 75 MHz; un modulateur 12A commandé par un train de deux impulsions de largeur étroite (par exemple de l'ordre de 50ns) à la récurrence d'émission TR; un commutateur d'aiguillage 12B des signaux vers les lignes dispersives à pentes opposées; un générateur d'impulsions 11 fournissant, entre autre, le top de départ S20 de la chronométrie distance vers le circuit de calcul 17 et commandant les commutateurs 12A et 12B; un ensemble de deux lignes à retard dispersives 13, 14 à pentes opposées $+K$ et $-K$ et leurs amplificateurs de puisance 51 et 52; une chaîne amplificatrice 53 avec limiteur 54 fournissant le signal de modulation du modulateur acousto-optique 16; et un commutateur à diodes 21A, 21B, permettant soit l'émission continue à la fréquence intermédiaire 150 MHz durant l'acquisition soit l'émission en modulation de fréquence.

Durant la poursuite, le signal appliqué sur le modulateur acousto-optique 16 est ainsi modulé linéairement en fréquence autour d'une fréquence centrale $F_1$ et alternativement avec deux pentes de dispersion symétriques en utilisant le mode de génération passive comprenant les deux lignes à retard électro-acoustiques 13 et 14. Les paires d'impulsions ainsi modulées sont séparées d'un intervalle de temps compatible d'une évolution non ambigüe de la distance de la cible.

Le sous-ensemble réception comprend principalement, connectés comme représenté: un préamplificateur 60 à faible bruit du signal de sortie du photo-détecteur 4, cette fonction est à large bande; une chaîne d'amplification linéaire 61 à large bande, un mélangeur BLU 25; un oscillateur contrôlé par tension 80 ou VCO, commandé à partir de l'analyseur de spectre 72 ou du signal Doppler différentiel $\Delta F_D$; un amplificateur de puissance 62; un ensemble de deux lignes à retard dispersives 63, 64 à pentes opposées et pondérées en amplitude; un amplificateur sommateur 65 des deux voies; un détecteur d'enveloppe 66; un amplificateur vidéo 67; un ensemble de traitement comprenant une fonction de post-intégration 68; un comparateur à seuil 69 dont le niveau de seuil fixe la probabilité de fausse alarme et de détection, et un module numérique de calcul 17 de la distance et de la vitesse radiale, et un interface d'asservissement 76 en poursuite Doppler de l'oscillateur 80 de transposition.

A la réception après mélange hétérodyne optique en 4 on recueille ainsi un signal MF centré sur $F_1+F_D$, $F_D$ étant la fréquence Doppler. Le traitement en moyenne fréquence utilise un système de filtrage adapté au signal utile à recevoir et se compose périodiquement des deux lignes à retard électro-acoustiques 63 et 64 conjuguées de cells d'émission. Sur la voie somme on recueille à chaque récurrence deux impulsions comprimées (Figure 2D) dont la largeur est de l'ordre de $1/\Delta F$ ($\Delta F=$largeur de bande de modulation) et décalées de $-KF_D$ par rapport à la position occupée par ces impulsions dans le cas d'une cible stationnaire ($K=$pente de dispersion en secondes par Hertz).

Le signal subit alors une détection d'enveloppe, un traitement de post-intégration et après calcul numérique on affiche les valeurs de la distance Do et de la vitesse radiale $V_R$ de la cible.

La largeur de bande Doppler du récepteur étant limitée à quelques MHz, il est effectué avant amplification MF une transposition de fréquence en 25 permettant, après connaissance de la fréquence Doppler $F_D$, de recentrer très rapidement le spectre du signal reçu sur la fréquence centrale $F_1$ de fonctionnement du récepteur (selon le processus d'acquisition Doppler). Pour la mesure Doppler le faisceau laser est translaté d'une fréquence fixe et le facteur de forme peut atteindre 100%.

La chaîne d'acquisition Doppler met en oeuvre principalement: un filtre coupe-bande 70 centré sur la fréquence $F_1$ (cas d'un Doppler nul); une amplification linéaire 71 large bande permettant d'adapter le signal issu de la détection à l'analyseur de spectre; un analyseur de spectre rapide 72 effectuant une mesure de la fréquence Doppler dans une bande $\Delta F$ avec une résolution de l'ordre de $I/T$ où T est la tranche du signal continu analysé, cette résolution est adaptée d'une part à la stabilité de la source laser et d'autre part à la bande de sélectivité Doppler du récepteur distance; des circuits de conversion en numérique 73 à cadence rapide permettant de quantifier la sortie analogique de l'analyseur de spectre à l'usage d'un ensemble de traitement numérique et de gestion 74; une base de temps 75 permettant de déclencher les cycles de travail de l'analyseur de spectre ainsi que l'échantillonnage du signal analogique issu de l'analyseur de fréquence; et des circuits de conversion en analogique de la tension de commande $V_D$ correspondant à la dérive Doppler $F_{Do}$ détectée.

Pour le système envisagé, la fréquence Doppler du signal reçu peut varier par exemple de $-20$ MHz à $+240$ MHz. Pour que la bande équivalente du filtre adapté de réception soit égale à celle du signal de modulation de l'acquisition distance, la sélectivité Doppler du récepteur distance doit se trouver limitée à quelques MHz.

L'utilisation d'un analyseur de spectre rapide permet d'acquérir la fréquence Doppler du signal reçu avant de pouvoir utiliser la chaîne d'acquisition de la distance avec des durées acceptables pour un système air-air.

En considérant qu'un radar annexe 31 coopère et fournit une prédétermination de la fréquence Doppler, par exemple à environ 10 MHz près, il est possible, en introduisant un translateur de fréquence 78—79 commandé par l'unité de gestion 74 et situé avant l'analyseur de spectre 72 de limiter notablement la bande de celui-ci avec une résolution compatible de la sélectivité Doppler du récepteur distance. Le signal S10 délivré par le radar est transmis à l'unité de gestion 74 qui élabore un signal de commande S11 correspondant destiné à l'oscillateur commandé 78. La sortie de ce VCO est appliquée au mélangeur 79 conjointement avec le signal S4 provenant du filtre 70.

La mise en oeuvre d'une détection hétérodyne permet de disposer d'un signal à une fréquence contenant l'information de la vitesse Doppler. Dans le cas du système proposé, le fréquence intermédiaire choisie est considérée de 150 MHz, et pour des fréquences Doppler variant entre −20 MHz et +240 MHz (vitesse relatives de cibles allant de −100 m/s à 1200 m/s) la fréquence du signal reçu variera entre 130 et 390 MHz.

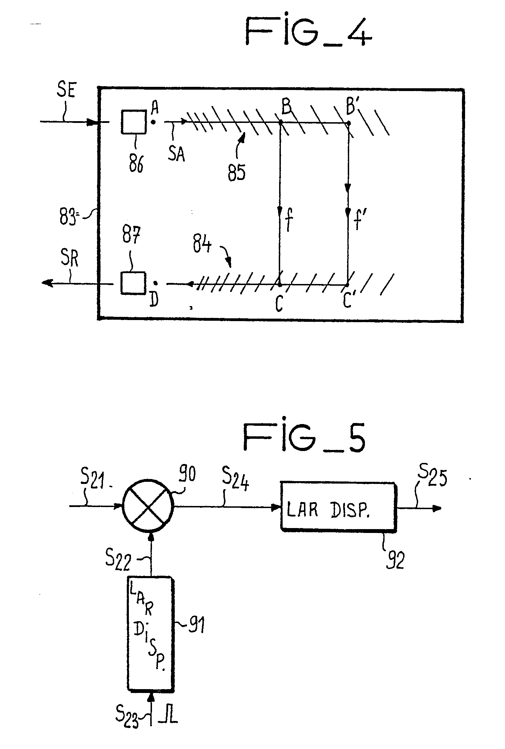

L'analyse de fréquence du signal est faite au moyen de l'analyseur de spectre de type électro-acoustique 72 qui constitue un moyen connu et dont le principe de fonctionnement est rappelé ci-après à l'aide des figures 4 à 6.

L'analyseur de spectre électro-acoustique permet d'obtenir quasiment en temps réel la transformée de Fourier d'une tranche de durée T d'un signal qui peut être continu à l'entrée.

La résolution en fréquence d'un tel système est limitée par la durée T pendant laquelle on analyse physiquement le signal. Elle est égale à 1/T, ce qui correspond à la largeur de la transformée de Fourier d'un signal monochromatique de durée T. L'échelle de fréquence est transformée linéairement en une échelle temporelle, la bande spectrale B analysée (B dépend des caractéristiques de l'analyseur) s'étend en sortie sur une durée T.

Le fonctionnement d'un tel analyseur fait appel à des lignes à retard dispersives (Figure 4). Celles-ci ont la propriété de retarder de façon différente les différentes composantes spectrales d'un signal. On utilise pour cela la propagation d'ondes acoustiques de surface sur un substrat monocristallin 83 sur lequel sont gravés deux réseaux semi-réfléchissants 84 et 85 de pas variable continûment.

Les ondes acoustiques SR sont obtenues à partir du signal d'entrée SE à l'aide d'un transducteur d'entrée 86. Elles se propagent alors sur le substrat en direction du réseau de traits.

Une composante spectrale de l'onde acoustique ne sera réfléchie à 90° par le réseau supérieur qu'au point où sa longueur d'onde correspond au pas du réseau (point B sur le schéma). Les ondes réfléchies par les traits du réseau voisins du point B interfèrent en effet constructivement.

Il en sera de même pour cette composante spectrale au point C où le second réseau le réfléchit vers le transducteur de sortie 87 qui la retransforme en signal électrique SR.

Une composante spectrale à une fréquence différente suivra un autre trajet, par exemple AB' C' D dont la longueur sera différente ce qui implique un temps de trajet différent (car la vitesse de propagation des ondes acoustiques n'est pas très élevée).

On a donc bien séparé temporellement les différentes composantes spectrales.

L'analyseur, dans sa version la plus simple, comporte deux lignes à retard dispersives 91—92 et un multiplicateur 90 comme schématisé sur la Figure 5.

Le multiplicateur 90 effectue le produit du signal d'entrée S21 par un signal S22 de durée T modulé linéairement en fréquence, signal Chirp obtenu comme réponse à une impulsion de Dirac S23 appliquée à la première ligne à retard 91.

Le signal S24 obtenu attaque la seconde ligne à retard 92 qui en effectue la convolution avec une fonction Chirp. La sortie S25 fournit directement la transformée de Fourier du signal d'entrée, à un facteur de phase près qui est sans importance lorsque l'on ne s'intéresse qu'à l'amplitude de la transformée de Fourier, ce qui est le cas ici.

La résolution en fréquence est de 1/T dans l'échelle des fréquences, ceci correspond à une durée physique en sortie de l'analyseur de 1/B dans l'échelle des temps, B est la bande explorée.

La référence temporelle pour la sortie est donnée par l'impulsion de Dirac qui attaque la première ligne à retard.

Le signal reçu d'une durée $T_1$ est échantillonné par l'analyseur de spectre à une période T; à chaque intervalle T l'analyseur de spectre fournit un signal caractéristique de sa fréquence. Chaque signal peut alors être mis sous forme numérique dans le circuit de conversion 73 et mémorisé dans l'ensemble 74 (Figure 3).

Si le rapport T1/T=K est supérieur à 1, K signaux sont mémorisés et peuvent être additionnés de façon incohérente dans la mémoire. Ce procédé permet une post-intégration en 74 qui améliore très sensiblement le rapport signal à bruit donc la portée du dispositif.

L'analyseur de spectre est caractérisé par la bande de fréquence à analyser B et la résolution en fréquence F=1/T, T temps d'analyse du spectre.

Le produit B.T. est aussi caractéristique de l'analyseur puisqu'il représente le nombre de points analysables dans une bande de fréquence B.

Le système de télémétrie laser et de mesure Doppler précédemment décrit présente des variantes conformes aux caractéristiques exposées et incluses dans le cadre de l'invention. Il peut être envisagé notamment d'utiliser deux lasers, un laser de puissance pour produire l'onde à la fréquence $F_E$ modulée en fréquence et un deuxième laser pour constituer un oscillateur local et délivrer l'onde non modulée à la fréquence $F_L$. Le laser de puissance peut comporter une modulation interne ou externe; dans ce dernier cas, le couplage parasite émission/réception dû aux réflexions et diffusions résiduelles au niveau du modulateur est atténué au maximum, au prix de l'inconvénient d'avoir à utiliser un deuxième laser et une boucle d'asservissement de fréquence pour maintenir la différence $F_E - F_L = F_I$. Cette boucle et, de manière analogue, le circuit d'asservissement 26 utilisé pour la poursuite Doppler, peuvent être réalisés en connectant en série, un préamplificateur, un amplificateur limiteur, un discriminateur de fréquence et un réseau de filtrage et d'adaptation (ou intégrateur) qui délivre la commande fine de calage en fréquence de l'organe à commander (laser de puissance, ou oscillateur local de transposition 24).

## Revendications

1. Système de télémétrie laser et de mesure Doppler à compression d'impulsions comportant: des moyens d'émission et d'oscillation locale (1) dotés d'un générateur laser (2) pour produire une première onde laser modulée en fréquence variable de part et d'autre d'une valeur moyenne $F_E$, cette première onde laser étant destinée à l'émission, et pour produire une deuxième onde laser non modulée de fréquence $F_L$ destinée à une réception superhétérodyne, un photomélangeur (4) pour mélanger l'onde de fréquence $F_L$ avec les signaux lumineux reçus et produire un signal électrique de battement ($S_4$) ayant la fréquence $F_I + F_D$ lors d'une détection d'une cible mobile, où $F_I = F_E - F_L$ et $F_D$ est la dérive en fréquence due à l'effet Doppler; un récepteur (6) alimenté par ledit signal électrique (S4) et qui comporte des circuits de traitement (15) par compression et détection ainsi que des circuits de calcul (17) de la distance et de la fréquence Doppler des cibles détectées, le système étant caractérisé en ce qu'il comporte en outre des moyens (20) d'acquisition et de poursuite de cible mobile destinés à produire une transposition de la fréquence $F_I + F_D$ à $F_I$ du signal électrique de battement, lesdits moyens d'acquisition et de poursuite comportant:

—dans le récepteur (6), un mélangeur BLU (25) connecté par une première entrée à la sortie (S4) du photo-mélangeur (4) et par une deuxième entrée à un oscillateur local à commande électrique (24) délivrant la fréquence d'oscillation locale pour ladite transposition de fréquence, une boucle d'acquisition Doppler (23) connectée entre le photo-mélangeur et l'oscillateur local commandé, laquelle boucle comporte un analyseur de spectre rapide (72) pour identifier, à partir du signal de battement (S4), la valeur $F_{Do}$ représentant sensiblement la dérive Doppler produit par la cible pendant une première phase, dite phase d'acquisition, et pour produire en fonction de $F_{Do}$ un signal de calage gros (S5) fourni à l'oscillateur local commandé (24) et maintenu aussi dans une seconde phase, dite phase de poursuite, pour compenser la dérive Doppler $F_{Do}$ dans le signal électrique transposé, et une boucle de poursuite (26) connectée également à l'oscillateur local commandé et recevant la signal de sortie des circuits de calcul, la boucle de poursuite effectuant la compensation fine de l'écart différentiel $\Delta F_D$ se produisant pendant la phase de poursuite entre la valeur instantanée $F_D$ de la dérive Doppler et la valeur $F_{Do}$,

—et dans l'émetteur (1), des moyens de commande (21, 22) pour effectuer l'émission de l'onde laser $F_E$ modulée à fréquence constante durant la phase d'acquisition.

2. Système selon la revendication 1, caractérisé en ce que l'analyseur de spectre (72) est du type électro-acoustique utilisant des lignes à retard dispersives (91—92) pour produire en temps réel la transformée de Fourier rapide du signal.

3. Système selon la revendication 1 ou 2, caractérisé en ce que la boucle d'acquisition Doppler (23) comporte des moyens produisant un signal de commande (S8) destiné aux moyens de commande pour passer au mode d'émission modulé à fréquence variable et assurer dès lors, par la boucle de poursuite, l'ajustage automatique de la transposition locale en fonction des variations d'écart Doppler différentiel $\Delta F_D$.

4. Système selon l'une quelconque des revendications 1 à 3, caractérisé en ce qu'il comporte un dispositif annexe (31) délivrant un signal de mesure grosse (S10) préalable de la dérive Doppler de la cible mobile poursuivie, et que l'analyseur de spectre (72) est d'une bande réduite moyennant une transposition préalable du signal d'entrée (S4) issu du photo-mélangeur (4) d'une quantité correspondant à ladite mesure grosse.

5. Système selon l'une quelconque des revendications 1 à 3, caractérisé en ce que les moyens d'émission et d'oscillation locale comportent un modulateur acousto-optique (16) pour moduler l'onde laser, un oscillateur local (10) pour produire un signal à une fréquence local déterminée, un circuit commutateur (12) interposé sur la sortie de cet oscillateur local pour laisser passer ledit signal local périodiquement en correspondance avec un paire d'impulsions périodique et le transmettre alternativement à une première ligne à retard dispersive de pente +K puis une deuxième ligne à retard dispersive de pente −K, les deux lignes étant réunies par leur sortie pour constituer le signal de modulation appliqué audit modulateur acousto-optique, et en ce que les moyens de commande comportent un deuxième circuit commutateur (21) contrôlé (S8) par la boucle d'acquisition (23) pour relier directement la sortie de l'oscillateur local au modulateur acousto-optique (16) durant la phase d'acquistion.

6. Système selon l'ensemble des revendications 1 à 4, caractérisé en ce que les moyens d'émission et d'oscillation locale comportent un montage à deux lignes dispersives (13, 14) de pentes opposées (+K, −K) pour moduler l'onde laser dans un modulateur acousto-optique (16) et produire deux impulsions Chirp, et que le récepteur comporte un montage avec une paire de lignes dispersives (63, 64) conjuguées de celle d'émission pour effectuer la démodulation par compression.

7. Système selon la revendication 5 ou 6, caractérisé en ce que le générateur laser comporte un maître oscillateur laser (40) dont l'onde est transmise à travers une glace partiellement réfléchissante (44) suivie d'un isolateur à effet Faraday (43), au modulateur acousto-optique (16) pour constituer l'onde émise, une faible fraction de l'onde laser étant dérivée par la glace pour constituer l'onde local destinée au photo-mélangeur (4).

8. Utilisation d'un système selon l'une quelconque des revendications précédentes dans un système de conduite de tir surface-surface, air-surface, surface-air ou air-air, notamment dans la gamme laser 10,6 microns, pour détecter des cibles dont la vitesse radiale peut évoluer dans une gamme au moins comprise entre −100 m/s et +1200 m/s.

**Patentansprüche**

1. Lasersystem zur Entfernungs- und Dopplermessung mit Impulskompression, wobei das System aufweist: Sende- und lokale Oszillationsmittel (1) mit einem Lasergenerator (2), um eine erste Laserwelle zu erzeugen, die mit variabler Frequenz zu beiden Seiten eines mittleren Werts $F_E$ moduliert und zur Aussendung bestimmt ist, und um eine zweite unmodulierte Laserwelle einer Frequenz $F_L$ zu erzeugen, die zum Superheterodyn-Empfang bestimmt ist, einen Lichtmischer (4) zur Mischung der Welle der Frequenz $F_L$ mit den empfangenen Lichtsignalen und zur Erzeugung eines elektrischen Schwebungssignals $(S_4)$ mit der Frequenz $F_I+F_D$ bei der Erfassung eines beweglichen Ziels, wobei $F_I=F_E-F_L$ ist und $F_D$ die Frequenzabweichung aufgrund des Dopplereffekts darstellt, einen Empfänger (6), der mit dem elektrischen Signal $(S_4)$ gespeist wird und Signalbehandlungskreise (15) zur Kompression und Erfassung sowie Rechenkreise (17) für die Berechnung der Entfernung und der Dopplerfrequenz der erfaßten Ziele, dadurch gekennzeichnet, daß das System außerdem Mittel (20) zur Aufnahme und zur Verfolgung eines beweglichen Ziels aufweist, die dazu bestimmt sind, eine Umsetzung der Frequenz $F_I+F_D$ auf die Frequenz $F_I$ des elektrischen Schwebungssignals durchzuführen, wobei die Aufnahme- und Verfolgungsmittel aufweisen:
— im Empfänger (6) einen Mischer BLU (25), der mit einem ersten Eingang an den Ausgang (S4) des Lichtmischers (4) und mit einem zweiten Eingang an einen elektrisch gesteuerten lokalen Oszillator (24) angeschlossen ist, der die lokale Oszillationsfrequenz für diese Frequenzumsetzung liefert, eine Doppleraufnahmeschleife (23), die zwischen den Lichtmischer und den gesteuerten lokalen Oszillator eingefügt ist und einen schnellen Spektralanalysator (22) aufweist, um ausgehend vom Schwebungssignal (S4) den Wert

$F_{Do}$ zu identifizeren, der im wesentlichen die vom Ziel während einer ersten Phase, Aufnahmephase genannt, erzeugte Dopplerabweichung darstellt, und um abhängig vom Signal $F_{Do}$ ein Grobverriegelungssignal (S5) zu erzeugen, das dem gesteuerten lokalen Oszillator (24) zugeführt wird und auch in einer zweiten Phase, Verfolgungsphase genannt, beibehalten wird, um die Dopplerabweichung $F_{Do}$ im umgesetzten elektrischen Signal zu kompensieren, und eine Verfolgungsschleife (26), die ebenfalls an den gesteuerten lokalen Oszillator angeschlossen ist und das Ausgangssignal des Rechenkreises zugeführt erhält, wobei diese Verfolgungsschleife die Feinkompensation der Differentialabweichung $\Delta F_D$ durchführt, die sich während Verfolgungsphase zwischen dem augenblicklichen Wert $F_D$ der Dopplerabweichung und dem Wert $F_{Do}$ ergibt,
—und im Sender (1) Steuermittel (21, 22), um die Aussendung der mit konstanter Frequenz modulierten Laserwelle $F_E$ während der Aufnahmephase durchzuführen.

2. System nach Anspruch 1, dadurch gekennzeichnet, daß der Spektralanalysator (72) ein elektroakustischer Analysator ist, der Dispersiv-Vezögerungsleitungen (91—92) zur Erzeugung der schnellen Fouriertransformierten des Signals in Echtzeit verwendet.

3. System nach Anspruch 1 oder 2, dadurch gekennzeichnet, daß die Doppleraufnahmeschleife (23) Mittel zur Erzeugung eines Steuersignals (S8) aufweist, das für die Steuermittel bestimmt ist, um in den Sendemodus mit variabler Frequenzmodulation überzugehen, und um so durch die Verfolgungsschleife die automatische Nachführung der lokalen Umsetzung abhängig von den Variationen der Differentialdopplerabweichung $\Delta F_D$ sicherzustellen.

4. System nach einem beliebigen der Ansprüche 1 bis 3, dadurch gekennzeichnet, daß es eine Zusatzvorrichtung (31) aufweist, die zuerst ein Grobmeßsignal (S10) der Dopplerabweichung des verfolgten beweglichen Ziels liefert, und daß der Spektralanalysator (72) aufgrund einer vorherigen Umsetzung des vom Lichtmischer (4) kommenden Eingangssignals (S4) ein um eine der Grobmessung entsprechende Größe reduziertes Frequenzband aufweist.

5. System nach einem beliebigen der Ansprüche 1 bis 3, dadurch gekennzeichnet, daß die Sendemittel und örtlichen Oszillatormittel einen akustooptischen Modulator (16) zur Modulation der Laserwelle, einen örtlichen Oszillator (10) zur Erzeugung eines Signals mit einer vorgegebenen örtlichen Frequenz und einen Umschaltkreis (12) aufweisen, der hinter dem Ausgang dieses örtlichen Oszillators liegt, um dieses örtliche Signal periodisch gemäß einem periodischen Impulspaar durchzulassen und es abwechselnd an eine erste Dispersiv-Verzögerungsleitung einer Steigung +K und dann an eine zweite Dispersiv-Verzögerungsleitung einer Steigung −K zu übertragen, wobei die beiden Leitungen mit ihren Ausgängen verbunden sind, um das an den akustooptischen Modulator angelegte Modulationssignal zu bilden, und daß die Steuermittel einen zweiten Umschaltkreis (21) aufweisen, der durch die Meßschleife (23) gesteuert wird (S8), um direkt den Ausgang des örtlichen Oszillators mit dem akustooptischen Modulator (16) während der Aufnahmephase zu verbinden.

6. System nach den Ansprüchen 1 bis 4, dadurch gekennzeichnet, daß die Sende- und örtlichen Oszillationsmittel eine Schaltung mit zwei Dispersivleitungen (13, 14) entgegengesetzter Steigungen (+K, −K) aufweisen, um die Laserwelle in einem akustooptischen Modulator (16) zu modulieren und zwei Impulse Chirp zu erzeugen, und daß der Empfänger eine Schaltung mit einem Paar von Dispersivleitungen (63, 64) aufweist, die zu denen auf der Sendeseite konjugiert sind, um die Demodulation durch Kompression zu bewirken.

7. System nach Anspruch 5 oder 6, dadurch gekennzeichnet, daß der Lasergenerator einen Hauptlaseroszillator (40) enthält, dessen Welle über einen teilreflektierenden Spiegel (44) gefolgt von einem Faradayeffektisolator (43) an den akustooptischen Modulator (16) übertragen wird, um die Sendewelle zu bilden, während ein kleiner Teil der Laserwelle durch den Spiegel abgelenkt wird, um die örtliche Welle zu bilden, die für den Lichtmischer (4) bestimmt ist.

8. Verwendung eines Systems nach einem beliebigen der vorhergehenden Ansprüche in einem Feuerleitsystem vom Typ Boden-Boden, Luft-Boden, Boden-Luft oder Luft-Luft, insbesondere im Laserbereich von 10,6 Mikrometer zur Erfassung von Zielen, deren radiale Geschwindigkeit in einem Bereich liegen kann, der mindestens zwischen −100 m/s und +1200 m/s liegt.

## Claims

1. A laser ranging and Doppler measuring system including a pulse compression, the system comprising: transmission and local oscillation means (1) including a laser generator (2) for producing a first laser wave modulated by a variable frequency about a mean value $F_E$, this first laser wave being intended to be transmitted, and for producing a second non-modulated laser wave $F_L$ conceived to be used in a superheterodyn reception, a light mixer (4) for mixing the wave of frequency $F_L$ with the received light signals and for producing an electric beat signal ($S_4$) of a frequency $F_I+F_D$ if a movable target is detected, in which $F_I=F_E-F_L$ and $F_D$ is the frequency drift due to the Doppler effect, a receiver (6) receiving said electric signal (S4) and comprising circuits (15) for processing by compression and detection as well as circuits (17) for computing the distance and the Doppler frequency of the detected target, the system being characterized in that it further comprises means (20) for acquiring and tracking a movable target, these means being conceived to produce a frequency transposition $F_I+F_D$ to $F_I$ of the electric beat signal, said acquisition and tracking means comprising:

—in the receiver (6), a mixer BLU (25) connected by a first input to the output (S4) of the light mixer (4) and by a second input to an electrically controlled local oscillator (24) supplying the local oscillation frequency for said frequency transposition, a Doppler acquisition loop (23) connected between the light mixer and the controlled local oscillator, said loop comprising a fast spectrum analyser (72) for identifying on the basis of the beat signal (S4) the value $F_{Do}$ substantially representing the Doppler drift produced by the target during a first phase, called acquisition phase, and for producing in accordance with $F_{Do}$ a coarse locking signal (S5) which is supplied to the controlled local oscillator (24) and maintained also in a second phase, called tracking phase, for compensating the Doppler drift $F_{Do}$ in the transposed electric signal, and a tracking loop (26) also connected to the controlled local oscillator and receiving the output signal of the computing circuit, the tracking loop performing the fine compensation of the differential shift $\Delta F_D$ existing during the tracking phase between the instantaneous value $F_D$ of the Doppler shift and the value $F_{Do}$,

—and, in the transmitter (1), control means (21, 22) for performing the transmission of the laser wave $F_E$, modulated at constant frequency, during the acquisition phase.

2. A system according to claim 1, characterized in that the spectrum analyser (72) is of the electroacoustical type and uses dispersive delay lines (91—92) for producing the fast Fourier transformed of the signal in real time.

3. A system according to claim 1 or 2, characterized in that the Doppler acquisition loop (23) comprises means producing a control signal (S8) for the control means in order to switch over to the variable frequency modulated transmission mode and to ensure thereby via the tracking loop the automatic adjusting of the local transposition in accordance with the variations of the differential Doppler shift $\Delta F_D$.

4. A system according to any one of claims 1 to 3, characterized in that it comprises a supplementary device (31) supplying a first coarse measuring signal (S10) of the Doppler shift of the tracked movable target, and that the spectrum analyser (72) is of a bandwidth reduced by a quantity corresponding to the coarse measuring value by means of a preliminary transition of the input signal (S4) coming from the light mixer (4).

5. A system according to any one of claims 1 to 3, characterized in that the transmission and local oscillation means comprise an acousto-optical modulator (16) for modulating the laser wave, a local oscillator (10) for producing a signal at a predetermined local frequency, a switch circuit (12) branched at the output of this local oscillator (12) in order to allow said local signal to pass periodically in accordance with a pair of periodical pulses and to transmit it alternately to a first dispersive delay line of slope +K and then to a second dispersive delay line of slope −K, the outputs of these two lines being interconnected in order to constitute the modulation signal applied to the acousto-optical modulator, and that the control means comprise a second switch circuit (21) controlled (S8) by the acquisition loop (23) for directly connecting the output of the local oscillator to the acousto-optical modulator (16) during the acquisition phase.

6. A system according to claims 1 to 4, characterized in that the transmission and local oscillation means comprise an arrangement with two dispersive lines (13, 14) of opposed slopes (+K, −K) in order to modulate the laser wave in an acousto-optical modulator (16) and to produce two Chirp pulses, and that the receiver comprises an arrangement including a pair of dispersive lines (63, 64) which are conjugated to those on the transmission side, in order to perform the demodulation by compression.

7. A system according to claim 5 or 6, characterized in that the laser generator comprises a master laser oscillator (40), the wave of which is transmitted through a partially reflecting mirror (44) followed by a Faraday effect isolator (43) to the acousto-optical modulator (16) for constituting the transmitted wave, a small portion of the laser wave being derived by the mirror in order to form the local wave intended for the light mixer (4).

8. The use of a system according to any one of the preceding claims in a fire guiding system of the ground-ground, air-ground, ground-air or air-air type, especially in the laser range of 10,6 micrometer, in order to detect targets of a radial speed ranging at least between −100 m/s and +1200 m/s.

0 120 775

FIG_1

FIG_2

# FIG_3

# FIG_4

# FIG_5